# EUROPÄISCHE PATENTSCHRIFT

(11) **EP 0 398 146 B1**
(45) Veröffentlichungstag und Bekanntmachung des Hinweises auf die Patenterteilung: **23.06.1993**
(21) Anmeldenummer: 90108745.2
(22) Anmeldetag: 09.05.1990
(51) Int. Cl.: F04B 1/20

(54) **Hydraulische Axialkolbenmaschine in Schiefscheibenbauart mit einer Nachführeinrichtung für den Käfig des Segmentwälzlagers der Schiefscheibe**
Hydraulic machine with axial pistons of the swash plate type with a follow-up mechanism for the cage of the swash plate segment bearing
Machine hydraulique à pistons axiaux du type à plateau en biais avec un dispositif de suivi pour la cage du palier à rouleaux du plateau en biais

(30) Priorität: 16.05.1989 DE 3915904
(43) Veröffentlichungstag der Anmeldung: 22.11.1990
(73) Patentinhaber: Hydromatik GmbH, 89275 Elchingen (DE)
(72) Erfinder: Schniederjan, Reinhold, D-7910 Neu-Ulm 8 (DE)
(74) Vertreter: Körber, Wolfhart, Dr.rer.nat.

(56) Entgegenhaltungen:
- DE-A- 2 826 928
- DE-A- 3 000 921
- DE-B- 2 521 312
- US-A- 3 396 670

## Beschreibung

Die Erfindung bezieht sich auf eine Axialkolbenmaschine nach dem Oberbegriff des Anspruches 1.

Eine Axialkolbenmaschine dieser Art ist in der DE-OS 30 00 921 beschrieben und dargestellt. Bei dieser bekannten Ausgestaltung ist das stangenförmige Führungselement in seinem ersten Lager in der Schwenkebene des Segmentwälzlagers schwenkbar und in seiner Längsrichtung verschiebbar mit der Wiege verbunden. In seinem zweiten Lager durchgreift es ein Ansatzteil des Käfigs quer zum Käfig in einem Führungsloch, wodurch es ebenfalls in der Schwenkebene des Segmentwälzlagers schwenkbar und in seiner Längsrichtung verschiebbar mit dem Käfig verbunden ist. An seiner dritten Lagerstelle ist das stangenförmige Führungselement ebenfalls in der Schwenkebene des Segmentwälzlagers schwenkbar, jedoch an seiner Längsrichtung unverschiebbar am Gehäuse der Axialkolbenmaschine gelagert.

Diese bekannte Ausgestaltung ermöglicht eine hinreichend genaue Führung des Käfigs, wodurch ein Verrutschen des Käfigs in Umfangsrichtung des Segmentwälzlagers vermieden wird. Um insbesondere bei größeren Schwenkwinkeln sich einstellende Bewegungsdifferenzen zwischen dem Führungselement und dem Käfig ausgleichen zu können, besteht das Führungselement aus einem elastisch biegsamen Federdraht, der sich aufgrund seiner elastischen Biegsamkeit an die Bewegungsdifferenzen anzupassen vermag.

Diese bekannte Ausgestaltung hat sich in der Praxis bewährt. Sie ist jedoch nur dann einsetzbar, wenn sich eine gehäusefeste Lagerung für das dritte Lager verwirklichen läßt. Dies ist jedoch nicht immer gewährleistet, z.B. aus Platzmangel.

Der Erfindung liegt die Aufgabe zugrunde, eine Axialkolbenmaschine der eingangs angegebenen Art so auszugestalten, daß eine Nachführung des Käfigs ohne eine Lagerung des Führungselementes am Gehäuse möglich ist.

Diese Aufgabe wird durch die kennzeichnenden Merkmale des Anspruches 1 gelöst.

Bei der erfindungsgemäßen Ausgestaltung wird zur Bildung des dritten Lagers das sich quer zur Achse der Axialkolbenmaschine verschiebbar geführte Verstellglied und die Wiege bzw. Schiefscheibe herangezogen, wobei das mit diesen beiden zusammenwirkende zusätzliche Führungsteil das dritte Lager bildet. Aufgrund dieser Ausgestaltung ist eine Nachführung des Käfigs auch ohne Abstützung am Gehäuse oder einem Anbauteil desselben gewährleistet. Es werden auch insbesondere in einem Schwenkbereich von +/-20° hinreichend genaue Nachführungsbewegungen ohne wesentliche Zwängungen erreicht.

Zwar beschreibt die US-PS 3 396 670 ebenfalls eine Axialkolbenmaschine in Schiefscheibenbauart mit einem quer zur Mittelachse verschiebbaren Stellglied für eine in einem Schwenklager mit Käfig verschwenkbare Wiege sowie mit einer Nachführeinrichtung für den Käfig. Im Gegensatz zur erfindungsgemäßen Lösung besteht jedoch die Funktion des Stellgliedes lediglich in der Verschwenkung der Wiege und die Nachführeinrichtung aus einem am Käfig drehbar befestigten Zahnrad, das mit einem an der Wiege befestigten sowie einem weiteren, am Gehäuse befestigten Zahnsegment kämmt. Zwischen der Nachführeinrichtung und dem Stellglied besteht weder ein konstruktiver noch ein funktioneller Zusammenhang.

Vorteilhafte Weiterbildungen der Erfindung, die bei Gewährleistung einer guten Funktion zu einfachen und kostengünstig herstellbaren Ausgestaltungen führen und auch aus Montage- bzw. Demontagegründen und auch aus Platzgründen von Vorteil sind, sind in den Unteransprüchen beschrieben.

Nachfolgend wird die Erfindung anhand eines bevorzugten Ausführungsbeispiels und einer Zeichnung näher erläutert. Es zeigt:
- Fig. 1: eine erfindungsgemäß ausgestaltete Axialkolbenmaschine in vereinfachter Darstellung;
- Fig. 2: den Schnitt II-II in Fig. 1,
- Fig. 3: die in Fig. 2 dargestellte Einzelheit in der Draufsicht, und
- Fig. 4: die Geometrie der Nachführeinrichtung nach Fig. 1.

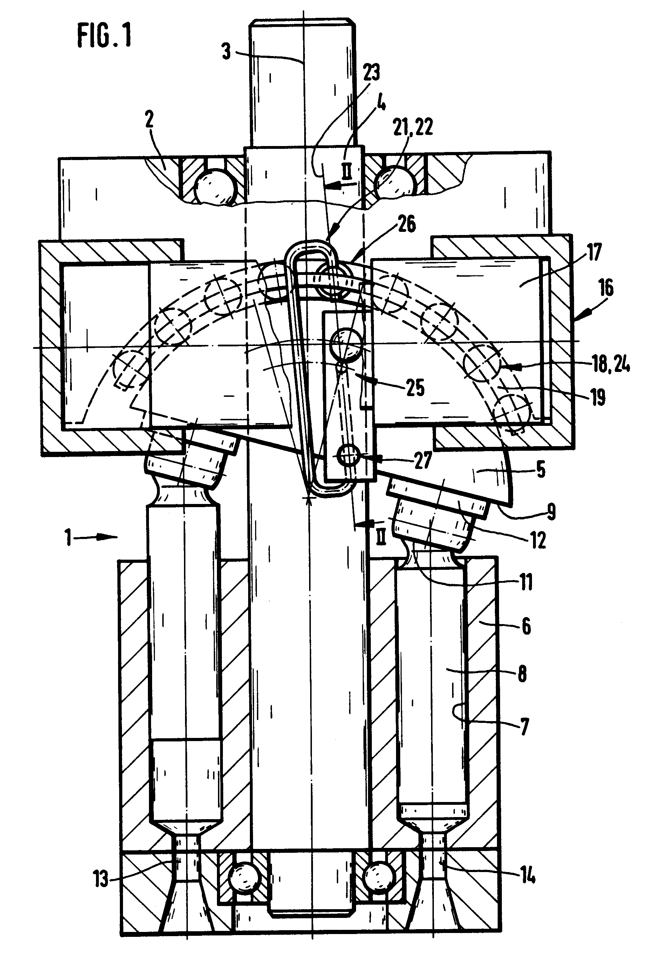

Die wesentlichen Teile der in Fig. 1 dargestellten Axialkolbenmaschine 1 in Schiefscheibenbauart sind ein Gehäuse 2, eine im Gehäuse 2 um dessen Mittelachse 3 drehbar gelagerte Antriebswelle 4, eine im Gehäuse 2 gegebenenfalls auf der Antriebswelle 4 schwenkbar gelagerte Schiefscheibe in Form einer Wiege 5, ein der Wiege 5 gegenüberliegend auf der Antriebswelle 4 angeordneter Zylinder 6 mit einer Mehrzahl auf dem Umfang gleichmäßig verteilt angeordneten axialen Kolbenbohrungen 7, in denen Kolben 8 axial verschiebbar gelagert sind, deren der Schiefscheibe 9 zugewandte Enden Kolbenköpfe 11 aufweisen, mit denen sie mittels Gleitschuhen 12 an der Schiefscheibe 9 gleiten, Steuerschlitze 13, 14, die bei einer Drehung des mit der Antriebswelle 4 drehenden Zylinders 6 die Zuführung bzw. Abführung des hydraulischen Mediums von einer Zuführungsleitung und einer Abführungsleitung steuern, und ein hydraulischer Verstellzylinder 16, dessen Kolben 17 die Wiege zwecks Einstellung eines bestimmten Durchsatzvolumens verstellt und in der jeweiligen Verstellstellung arretiert. Bei den hin- und hergehenden Schwenkbewegungen der Wiege 5 ist nicht auszuschließen, daß das zwischen der konkav gerundeten Lagerfläche des Gehäuses 2 und der konvex gerundeten Lagerfläche der Wiege 5 angeordnete Wälzlagersegment 18 mit einem Käfig 19 aufgrund von auf die Dauer nicht zu vermeidenden Gleitbewegungen sich bezüglich einer vorgegebenen Position zwischen den Lagerteilen seitlich verlagert bzw. verrutscht. Um dies zu vermeiden, ist eine Nachführvorrichtung 21 vorgesehen, die den Käfig 19 daran hindert, aus seinem vorgegebenen Schwenkbereich herauszuwandern. Die Nachführvorrichtung 21 weist ein stangenförmiges Führungselement 22 auf, dessen Wirkachse mit 23 bezeichnet ist. Gesehen in der Ansicht rechtwinklig zur Bewegungsebene E des Fürhungselementes 22, die parallel zur Schwenkebene SE des allgemein mit 24 bezeichneten Schwenklagers verläuft, verläuft die Wirkachse 23 durch drei larger 25, 26, 27 für das Führungselement 22. Im mit 25 bezeichneten ersten Lager ist das Führungselement 22 in der Schwenkebene E schwenkbar an der Seitenfläche der Wiege 5 gelagert. Hierzu dient ein sich quer zur Wirkachse 23 erstreckender Zapfen 28, der in einer entsprechend bemessenen Bohrung 29 in der Wiege 5 einfaßt und darin drehbar gelagert ist.

Im zweiten Lager 26 durchfaßt das Führungselement 22 den Käfig 19 radial in einem seitlich vorstehenden Mitnehmeransatz 31, wobei zur Aufnahme des Führungselements 22 eine Buchse 32 in den Mitnehmeransatz 31 fest eingesetzt ist, in der das Führungselement 22 in seiner Längsrichtung (Wirkachse 23) frei verschiebbar gelagert ist.

Zur Verbindung des Kolbens 17 mit der Wiege 5 ist ein im Querschnitt rechteckförmiger Gleitstein 33 und ein Lagerzapfen 34 an der Wiege 5 vorgesehen, auf dem der Gleitstein 33 in einer Lagerbohrung 35 um die Achse des Lagerzapfens 34 schwenkbar gelagert ist. Der Lagerzapfen 34 erstreckt sich quer zum Kolben 17 und greift etwa schließend in eine im Querschnitt rechteckige Umfangsnut 36 im Kolben 17 ein. Die Lagerbohrung 35 befindet sich an einem Ende des Gleitsteines 33. An seinem anderen Ende ist ein sich parallel zum Lagerzapfen 34 erstreckender Gelenkbolzen 37 frei drehbar im Gleitstein 33 gelagert, der unterseitig vom etwas höher als das Führungselement 22 angeordneten Gleitstein 33 hervorragt und diametral vom stangenförmigen Führungselement 22 in einer Querbohrung 37 mit Gleitspiel durchfaßt wird. Hierdurch ist das dritte Lager 27 des Führungselementes 22 gebildet.

Das Führungselement 22 selbst wird durch eine C-förmige Rundstange 41 vorzugsweise aus Federstahl gebildet, deren aufeinanderzu gerichtete Stangenabschnitte 42, 43 sich gerade und koaxial zueinander erstrecken. Der Rückenabschnitt 44 der C-Form erstreckt sich parallel zu den Stangenabschnitten 42, 43. Aufgrund dieser C-Form braucht das stangenartige Führungselement 22 sich nicht gerade zwischen den Lagern 25 bis 27 erstrecken, sondern unter Umgehung des Lagerzapfens 34, dessen Schwenkachse 45 die Wirkachse 23 schneidet, von außen in das zweite und dritte Lager 26, 27 hineinragen. Die aufeinanderzu gerichteten Stangenabschnitte 42, 43 sind so lang bemessen, daß bei der Pendelbewegung der Wiege 5 die Stangenabschnitte 42, 43 nicht aus den Lagerstellen 26, 27 herausrutschen.

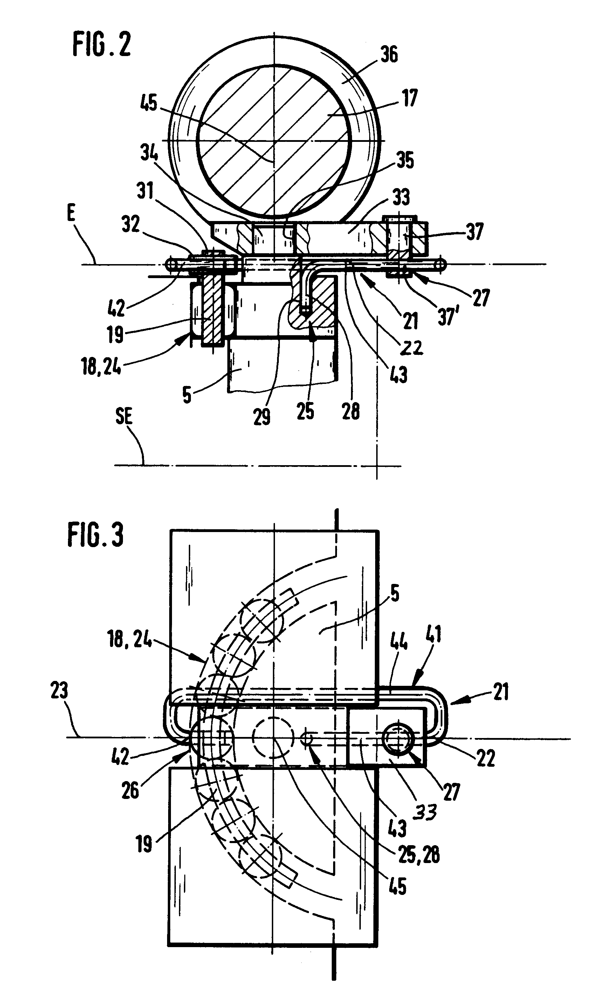

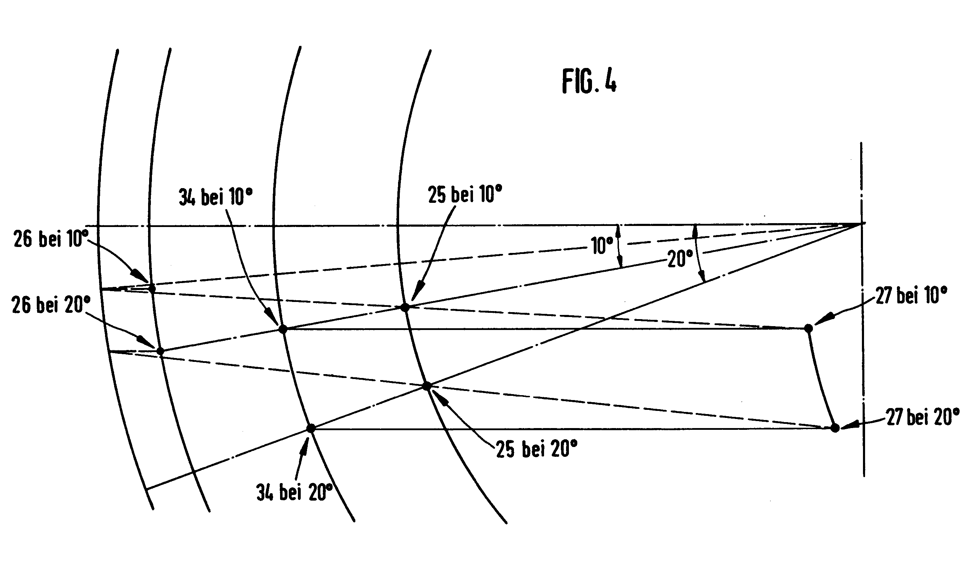

Wenn die Wiege 5 mittels des Kolbens 17 durch dessen Angriff am Lagerzapfen 34 z.B. gemäß Fig. 3 nach unten schwenkt, wandern zwangsläufig auch die Lager 25, 26, 27 nach unten, wobei sie in der jeweiligen Schwenkstellung (z.B. 10° oder 20°) Stellungen einnehmen, in der das Lager 26 am Käfig 19 gegenüber dem Umfangsweg der Gleitbahn der Wiege 5 nur um die Hälfte dieses Umfangsweges verschoben ist (Abrollung). Diese Stellungen bei einer Verschwenkung von 10° und 20° sind in Fig. 4 dargestellt.

Im Rahmen der Erfindung ist es auch möglich, die Anordnung so zu treffen, daß sich die Lagerpunkte 25, 27 des Führungselementes am Gleitstein 33 und an der Wiege 5 zwischen dem Lagerzapfen 34 und dem Lager 26 am Käfig 19 befinden.

## Patentansprüche

1. Hydraulische Axialkolbenmaschine (1) in Schiefscheibenbauart, deren Schiefscheibe (9) an einer in einem Segmentwälzlager (24) schwenkbar gelagerten Wiege (5) angeordnet ist, mit einer Nachführeinrichtung (21) für den Käfig (19) des Segmentwälzlagers (24), die ein stangenförmiges Führungselement (22) aufweist, das in einem ersten Lager (25) in der Wiege (5) parallel zur Schwenkebene (SE) schwenkbar mit der Wiege (5) verbunden ist, in einem zweiten Lager (26) parallel zur Schwenkebene (SE) schwenkbar und in seiner Längsrichtung (23) verschiebbar mit dem Käfig (19) verbunden ist, und in einem dritten Lager (27) parallel zur Schwenkebene (SE) schwenkbar gelagert ist,
**dadurch gekennzeichnet,**
daß die Wiege (5) durch ein mit ihr über einen Lagerzapfen (34) verbundenes, quer zur Mittelachse (3) der Axialkolbenmaschine (1) verschiebbar gelagertes Stellglied (17) verstellbar und das dritte Lager (27) an einem an den Lagerzapfen (34) angelenkten, in einer zur Mittelachse (3) parallelen Führung (36) am Stellglied (17) verschiebbaren Führungsteil (33) angeordnet ist.

2. Axialkolbenmaschine nach Anspruch 1,
**dadurch gekennzeichnet,**
daß die Führung (36) als Umfangsnut im Stellglied (17) und das Führungsteil (33) als Gleitstein ausgebildet ist, der eine Lagerbohrung (35) aufweist, in welcher der an der Wiege (5) befestigte, senkrecht zur Schwenkebene (SE) verlaufende Lagerzapfen (34) drehbar angeordnet ist.

3. Axialkolbenmaschine nach Anspruch 1 oder 2,
**dadurch gekennzeichnet,**
daß das Führungselement (22) im ersten Lager (25) in seiner Längsrichtung (23) unverschieblich an der Wiege (5) gelagert und im dritten Lager (27) in seiner Längsrichtung (23) verschiebbar mit dem Führungsteil (33) verbunden ist.

4. Axialkolbenmaschine nach wenigstens einem vorhergehenden Anspruch,
**dadurch gekennzeichnet,**
daß das Stellglied (17) ein hydraulischer Kolben ist.

5. Axialkolbenmaschine nach wenigstens einem vorhergehenden Anspruch,
**dadurch gekennzeichnet,**
daß das Führungselement (22) zwischen der Wiege (5) und dem Führungsteil (33) angeordnet ist und einen sich rechtwinklig zur Schwenkebene (SE) erstreckenden, im Führungsteil (33) drehbar gelagerten Gelenkbolzen (37) diametral mit Bewegungsspiel durchfaßt.

6. Axialkolbenmaschine nach wenigstens einem vorhergehenden Anspruch,
**dadurch gekennzeichnet,** daß das erste Lager (25) und das dritte Lager (27) auf der dem zweiten Lager (26) abgewandten Seite des Lagerzapfens (34) angeordnet sind.

7. Axialkolbenmaschine nach wenigstens einem der Ansprüche 1 bis 5,
**dadurch gekennzeichnet,**
daß das erste Lager (25) und das dritte Lager (27) zwischen dem zweiten Lager (26) und dem Lagerzapfen (34) angeordnet sind.

8. Axialkolbenmaschine nach wenigstens einem vorhergehenden Anspruch,
**dadurch gekennzeichnet,**
daß das Führungselement (22) durch einen C-förmig gebogenen runden Draht gebildet ist, von dessen einander zugewandten freien Enden (42, 43) das eine freie Ende (42) sich bis in den Bereich des zweiten Lagers (26) und das andere freie Ende (43) sich durch das dritte Lager (27) hindurch bis zum ersten Lager (25) erstreckt.

9. Axialkolbenmaschine nach Anspruch 8,
**dadurch gekennzeichnet,**
daß das erste Lager (25) durch eine sich rechtwinklig zur Schwenkebene (SE) erstreckende Sackbohrung (29) in derSchwenkwiege (5) und einen rechtwinklig abgebogenen Schenkel (28) des sich zum dritten und ersten Lager (27, 25) erstreckenden freien Endes (43) des Führungselementes (22) gebildet ist.

10. Axialkolbenmaschine nach Anspruch 8 oder 9,
**dadurch gekennzeichnet,**
daß der Draht aus Federstahl besteht.

## Claims

1. A swashplate type hydraulic axial piston machine (1) wherein the swashplate (9) is arranged on a rocker (5) mounted to pivot in a segmental rolling contact bearing (24), said machine having a tracking device (21) for the cage (19) of the segmental rolling contact bearing (24) which comprises a rod-like guide element (22) which is connected to the rocker (5) in a first bearing (25) in the rocker (5) so that it can pivot parallel to the pivot plane (SE), and is connected to the cage (19) in a second bearing (26) so that it can pivot parallel to the pivot plane (SE) and can be displaced longitudinally (23), and is mounted to pivot parallel to the pivot plane (SE) in a third bearing (27), characterised in that the rocker (5) can be adjusted by an adjustment member (17) connected thereto by a pivot journal (34) and mounted so that it can be displaced transverse to the middle axis (3) of the axial piston machine (1) and that the third bearing (27) is arranged on a guide part (33) joined to the pivot journal (34) which can be moved parallel to the middle axis (3) in a guide (36) on the adjustment member (17).

2. An axial piston machine according to claim 1, characterised in that the guide (36) is formed as a peripheral groove in the adjustment member (17) and the guide part (33) is formed as a slide block that has a bearing bore (35) in which the pivot journal (34) that is attached to the rocker (5) and extends at right angles to the pivot plane (SE) is arranged to rotate.

3. An axial piston machine according to claim 1 or claim 2, characterised in that the guide element (22) is mounted to the rocker (5) in the first bearing (25) so that it cannot be displaced longitudinally (23) and is connected to the guide part (33) in the third bearing (27) so that it can be displaced longitudinally (23).

4. An axial piston machine according to at least one of the preceding claims, characterised in that the adjustment member (17) is a hydraulic piston.

5. An axial piston machine according to at least one of the preceding claims, characterised in that the guide element (22) is arranged between the rocker (5) and the guide part (33) and passes diametrically, with play, through a hinge pin (37) that extends at right angles to the pivot plane (SE) and is mounted to rotate in the guide part (33).

6. An axial piston machine according to at least one of the preceding claims, characterised in that the first bearing (25) and the third bearing (27) are arranged on the side of the pivot journal (34) remote from the second bearing (26).

7. An axial piston machine according to at least one of claims 1 to 5, characterised in that the first bearing (25) and the third bearing (27) are arranged between the second bearing (26) and the pivot journal (34).

8. An axial piston machine according to at least one of the preceding claims, characterised in that the guide member (22) comprises a C-shaped circular wire with mutually facing free ends (42, 43) of which the one free end (42) extends into the region of the second bearing (26) and the other free end (43) extends through the third bearing (27) to the first bearing (25).

9. An axial piston machine according to claim 8, characterised in that the first bearing (25) comprises a blind bore (29) in the pivot rocker (5) extending at right angles to the pivot plane (SE) and a limb (28), bent at right angles, of the free end (43) of the guide element (22) that extends to the third and first bearings (27, 25).

10. An axial piston machine according to claim 8 or claim 9, characterised in that the wire is of spring steel.

## Revendications

1. Machine hydraulique (1) à pistons axiaux, du type à plateau oblique, dont le plateau oblique (9) est disposé sur un berceau (5) monté oscillant sur un segment de roulement à rouleaux (24) avec un dispositif de guidage supplémentaire (21) pour la cage (19) du segment de roulement à rouleaux (24), ce dispositif présentant un élément de guidage (22) en forme de tige qui est relié au berceau (5) de manière pivotante dans un premier palier (25) dans le berceau (5) parallèlement au plan d'oscillation (SE), en étant pivotant dans un deuxième palier (26) parallèlement au plan d'oscillation (SE) et en étant relié à la cage (19) en pouvant coulisser dans son sens longitudinal (23), et en étant monté pivotant dans un troisième palier (27) pour pivoter parallèlement au plan d'oscillation (SE),
**caractérisée** en ce que le berceau (5) est réglable en position par l'intermédiaire d'un tourillon (34) par un organe de réglage (17) monté coulissant transversalement à l'axe médian (3) de la machine à pistons axiaux (3) et en ce que le troisième palier (27) est disposé sur une pièce de guidage (33) coulissante sur l'organe de réglage (17) dans un guidage (36) parallèle à l'axe médian (3) et articulée sur le tourillon (34).

2. Machine à pistons axiaux selon la revendication 1, caractérisée en ce que le guidage (36) est sous la forme d'une gorge périphérique dans l'organe de réglage (17) et que la pièce de guidage (33) est sous la forme d'un marbre de glissement présentant une forure de palier (35) dans laquelle est disposé pivotant le tourillon (34) fixé au berceau (5) et s'étendant perpendiculairement au plan d'oscillation (SE).

3. Machine à pistons axiaux selon la revendication 1 ou 2, caractérisée en ce que l'élément de guidage (22) est monté sur le berceau (5) dans le premier palier (25) en étant empêché de coulisser dans son sens longitudinal (23) et est relié, dans le troisième palier (27) à la pièce de guidage (33) en pouvant coulisser dans son sens longitudinal (23).

4. Machine à pistons axiaux selon au moins une revendication précédente, caractérisée en ce que l'organe de réglage (17) est un piston hydraulique.

5. Machine à pistons axiaux selon au moins une revendication précédente, caractérisée en ce que l'élément de guidage (22) est disposé entre le berceau (5) et la pièce de guidage (33) et traverse diamètralement, avec du jeu de mouvement, un pivot (37) monté rotatif dans la pièce de guidage (33) en s'étendant perpendiculairement au plan d'oscillation (SE).

6. Machine à pistons axiaux selon au moins une revendication précédente, caractérisée en ce que le premier palier (25) et le troisième palier (27) sont disposés sur le côté du tourillon (34) opposé au deuxième palier (26).

7. Machine à pistons axiaux selon au moins une des revendications 1 à 5, caractérisée en ce que le premier palier (25) et le troisième palier (27) sont disposés entre le deuxième palier (26) et le tourillon (34).

8. Machine à pistons axiaux selon au moins une revendication précédente, caractérisée en ce que l'élément de guidage (22) est constitué d'un fil rond plié en forme de C dont les extrémités libres (42, 43) sont tournées l'une vers l'autre, l'une (42) de ces extrémités libres s'étendant jusque dans la zone du deuxième palier (26) et l'autre (43) de ces extrémités libres s'étendant à travers le troisième palier (27) jusqu'au premier palier (25).

9. Machine à pistons axiaux selon la revendication 8, caractérisée en ce que le premier palier (25) est constitué par un trou borgne (29) s'étendant perpendiculairement au plan d'oscillation (SE) dans le berceau oscillant (5) et par une branche (28) repliée à angle droit de l'extrémité libre (43) de l'élément de guidage (22) s'étendant au troisième palier et au premier palier (27, 25).

10. Machine à pistons axiaux selon la revendication 8 ou 9, caractérisée en ce que le fil métallique est en acier à ressort.
